# EUROPÄISCHE PATENTANMELDUNG

(11) **EP 2 743 296 A1**
(43) Veröffentlichungstag der Anmeldung: **18.06.2014**
(21) Anmeldenummer: 12196425.8
(22) Anmeldetag: 11.12.2012
(51) Int. Cl.: C08J 9/232, C08J 9/35

(54) **Verfahren zur Herstellung eines flammgeschützten Dämmelementes, Dämmelement sowie Verwendung eines Dämmelementes**

(71) Anmelder: STO SE & Co. KGaA, 79780 Stühlingen (DE)
(72) Erfinder: Hitzler, Martin, 78244 Gottmadingen (DE); Kohler, Eva, 79777 Ühlingen-Birkendorf (DE); Weier, Andreas, 78647 Trossingen (DE); Schmeier, Silke, 79848 Bonndorf / Wittlekofen (DE)
(74) Vertreter: Gottschalk, Matthias

(57) **Zusammenfassung**

Die Erfindung betrifft Verfahren zur Herstellung eines flammgeschützten Dämmelementes aus einem Verbundschaumstoff umfassend geschäumtes Polystyrol, in den Partikel oder Stücke eines geschäumten duroplastischen Kunststoffs eingebunden sind. Erfindungsgemäß wird ein schäumbarer oder geschäumter duroplastischer Kunststoff verwendet, der mit einem Flammschutzmittel ausgerüstet ist. Der mit einem Flammschutzmittel ausgerüstete, schäumbare oder geschäumte duroplastische Kunststoff wird geschäumt und/oder in Stücke zerteilt, anschließend mit vorgeschäumten Polystyrol-Partikeln homogen gemischt und die Mischung in einer Form unter Zugabe von Druck und/oder Wärme zu einem Verbundkörper verschweißt.

Ferner betrifft die Erfindung ein Dämmelement aus einem Verbundschaumstoff umfassend geschäumtes Polystyrol, in den Partikel oder Stücke eines geschäumten duroplastischen Kunststoffs eingebunden sind. Erfindungsgemäß ist der eingebundene duroplastische Kunststoff mit einem Flammschutzmittel ausgerüstet.

Ferner wird die Verwendung eines solchen Dämmelementes zur Schall- und/oder Wärmedämmung einer Gebäudewand oder -decke vorgeschlagen.

## Beschreibung

Die Erfindung betrifft ein Verfahren zur Herstellung eines flammgeschützten Dämmelementes mit den Merkmalen des Oberbegriffs des Anspruchs 1. Ferner betrifft die Erfindung ein Dämmelement mit den Merkmalen des Oberbegriffs des Anspruchs 8 sowie eine Verwendung eines solchen Dämmelementes.

### Stand der Technik

Aus dem Stand der Technik ist eine Vielzahl an Dämmmaterialien bekannt, die als Dämmelemente zur Schall- und/oder Wärmedämmung von Gebäudewänden oder - decken eingesetzt werden. Besonders häufig gelangen Hartschaumplatten, insbesondere Polystyrol-Hartschaumplatten als solche Dämmelemente Einsatz. Denn diese weisen gute Wärmedämmeigenschaften auf, sind auf der Baustelle einfach zu handhaben und zudem relativ preisgünstig. Als nachteilig erweist sich jedoch in der Regel das Brandverhalten derartiger Dämmelemente, die daher regelmäßig der Baustoffklasse B (brennbare Baustoffe) gemäß DIN 4102-1 zuzuordnen sind.

Es besteht demnach ein allgemeines Interesse, das Brandverhalten derartiger Dämmelemente zu verbessern, um einen effektiven Brandschutz zu gewährleisten.

Aus der WO 2008/145599 A1 ist ein feuerhemmender Polystyrol-Schaumstoff bekannt, welcher zum einen ein verbessertes Brandverhalten aufweisen und zum anderen keine Verschlechterung seiner ursprünglichen Eigenschaften aufweisen soll. Insbesondere soll der Polystyrol-Schaumstoff weiterhin eine geringe Wasserdurchlässigkeit, eine hohe Wasserbeständigkeit, sehr guter Wärmedämm- und Schallschutzeigenschaften sowie eine hohe mechanische Festigkeit bei gleichzeitig geringem Gewicht bzw. geringer Dichte aufweisen. Darüber hinaus soll die Herstellbarkeit des Polystyrol-Schaumstoffs auf den herkömmlichen Anlagen gewährleistet sein, so dass er weiterhin kostengünstig herstellbar ist. Gemäß der Druckschrift werden diese Ziele durch eine Zusammensetzung erreicht, welche expandierte oder expandierbare Polystyrol-Partikel, einen intumeszenten Stoff und einen feuerbeständigen Binder umfasst. Der Anteil der Polystyrol-Partikel beträgt dabei 20-75 Gew.-% bezogen auf das Gesamtgewicht der Zusammensetzung bestehend aus Polystyrol-Partikel, intumeszenter Stoff und Binder. Das heißt, dass der Polystyrol-Partikelanteil deutlich reduziert ist. Dies muss zwangsläufig eine Veränderung der Wärmedämmeigenschaften eines hieraus hergestellten Dämmelementes zur Folge haben. Insbesondere sollte eine Verschlechterung der Wärmedämmeigenschaften zu beobachten sein, wenn gemäß einem bevorzugten Ausführungsbeispiel der WO 2008/145599 A1 eine Zusammensetzung verwendet wird, deren Polystyrol-Partikelanteil deutlich unter 50 Gew.-% bezogen auf das Gesamtgewicht der Zusammensetzung liegt.

Ausgehend von dem vorstehend genannten Stand der Technik liegt der vorliegenden Erfindung die Aufgabe zugrunde, ein Verfahren zur Herstellung eines flammgeschützten Dämmelementes anzugeben, das einerseits kostengünstig durchführbar ist, andererseits zu einem Dämmelement führt, das nicht nur einen effektiveren baulichen Brandschutz, sondern auch einen effektiven Wärmeschutz gewährleistet.

Zur Lösung der Aufgaben wird ein Verfahren mit den Merkmalen des Anspruchs 1 sowie ein Dämmelement mit den Merkmalen des Anspruchs 8 vorgeschlagen. Vorteilhafte Weiterbildungen sind in den jeweiligen Unteransprüchen angegeben. In Anspruch 11 wird ferner eine bevorzugte Verwendung eines erfindungsgemäßen Dämmelementes vorgeschlagen.

### Offenbarung der Erfindung

Vorgeschlagen wird ein Verfahren zur Herstellung eines flammgeschützten Dämmelementes aus einem Verbundschaumstoff umfassend geschäumtes Polystyrol, in den Partikel oder Stücke eines geschäumten duroplastischen Kunststoffs eingebunden sind. Erfindungsgemäß ist vorgesehen, dass ein schäumbarer oder geschäumter duroplastischer Kunststoff verwendet wird, der mit einem Flammschutzmittel ausgerüstet ist. Der mit einem Flammschutzmittel ausgerüstete, schäumbare oder geschäumte duroplastische Kunststoff wird geschäumt und/oder in Stücke zerteilt, anschließend mit vorgeschäumten Polystyrol-Partikeln homogen gemischt und die Mischung in einer Form unter Zugabe von Druck und/oder Wärme zu einem Verbundkörper verschweißt. Die Zugabe des Flammschutzmittels erfolgt demnach über die Beimischung des geschäumten duroplastischen Kunststoffs, der somit als Flammschutzmittel-Träger dient. Zwar wird durch Beimischung des geschäumten duroplastischen Kunststoffs weiterhin der Polystyrol-Anteil des Dämmstoffs reduziert, da geschäumte duroplastische Kunststoffe jedoch ebenfalls gute Wärmedämmeigenschaften besitzen, verändert sich die Wärmeleitfähigkeit eines derart hergestellten Dämmelementes gegenüber herkömmlichen Dämmelementen aus Polystyrol-Hartschaum nur unwesentlich.

Die Zugabe eines Flammschutzmittels über die Beimischung flammgeschützter Partikel bzw. Stücke aus einem duroplastischen Kunststoff weist ferner den Vorteil auf, dass die Gefahr einer Entmischung der Ausgangsstoffe, insbesondere nach dem Einbringen in eine Form, reduziert ist. Dies liegt darin begründet, dass die Rohdichte des geschäumten duroplastischen Kunststoffs kompatibel zu der des geschäumten Polystyrols ist. Auf diese Weise ist eine gleichmäßige Verteilung des Flammschutzmittels innerhalb des Dämmelementes sichergestellt.

Gemäß einer bevorzugten Ausführungsform der Erfindung wird Polyurethan, Polyisocyanurat, Phenolharzschaum und/oder Melaminharzschaum als schäumbarer oder geschäumter duroplastischer Kunststoff verwendet. Besonders bevorzugt wird Polyurethan als Flammschutzmittel-Träger eingesetzt. Denn dieser ist einerseits weitgehend frei formulierbar und demnach mit hoch-aktiven Flammschutzmitteln ausrüstbar, andererseits ist die Kompatibilität mit Polystyrol gewährleistet. Dabei kann Polyurethan sowohl als Hartschaum, als auch als Weichschaum in die Matrix aus geschäumtem Polystyrol eingebunden werden.

Des Weiteren wird vorgeschlagen, dass der duroplastische Kunststoff mit Melamin, Tris(2-chlorisopropyl)phosphat (TCPP) und/oder Blähgraphit als Flammschutzmittel ausgerüstet ist. Diese Mittel haben sich in Rahmen von Brandversuchen als besonders effektiv erwiesen.

Bevorzugt werden 5 bis 80 Gew.-%, vorzugsweise 10 bis 60 Gew.-%, weiterhin vorzugsweise 20 bis 40 Gew.-%, mit Flammschutzmittel ausgerüsteter geschäumter duroplastischer Kunststoff und/oder 20 bis 95 Gew.-%, vorzugsweise 40 bis 90 Gew.-%, weiterhin vorzugsweise 60 bis 80 Gew.-% vorgeschäumte Polystyrol-Partikel bezogen auf das Gesamtgewicht der Ausgangsstoffe verwendet. Demnach kann der Gewichtsanteil des geschäumten duroplastischen Kunststoffs auch größer als der des geschäumten Polystyrols sein. Dennoch bleiben die hervorragenden Wärmedämmeigenschaften eines derart hergestellten Dämmelementes erhalten, da auch geschäumter duroplastischer Kunststoff eine niedrige Wärmeleitfähigkeit aufweist und somit weiterhin einen effektiven Wärmeschutz gewährleistet. Mit zunehmendem Gewichtanteil des geschäumten duroplastischen Kunststoffs als Flammschutzmittel-Träger nimmt zudem die Entzündungsneigung des Dämmelementes ab.

In Weiterbildung der Erfindung wird vorgeschlagen, dass ein schäumbarer, mit Flammschutzmittel ausgerüsteter duroplastischer Kunststoff verwendet wird, der geschäumt und beim Schäumen mit vorgeschäumten Polystyrol-Partikeln verbunden wird, wobei die vorgeschäumten Polystyrol-Partikel in eine Oberfläche des geschäumten duroplastischen Kunststoffs eingebunden werden. Durch die in der Oberfläche der geschäumten Partikel aus duroplastischem Kunststoff eingebundenen Polystyrol-Partikel erhalten erstere ein "igelartiges" Aussehen. Die Verbundpartikel werden dann anschließend mit weiteren vorgeschäumten Polystyrol-Partikeln homogen gemischt und die Mischung wird in einer Form unter Zugabe von Druck und/oder Wärme zu einem Verbundkörper verschweißt. Die in den duroplastischen Kunststoff eingebundenen vorgeschäumten Polystyrol-Partikel verschmelzen dabei mit den beigemischten weiteren vorgeschäumten Polystyrol-Partikeln, so dass ein besonders stabiler Verbund erzielt wird.

Der Verfahrensschritt des Schäumens des duroplastischen Kunststoffs kann entfallen, wenn ein bereits geschäumter duroplastischer Kunststoff verwendet wird. Durch die Verwendung eines bereits geschäumten duroplastischen Kunststoffs werden die Herstellungskosten gesenkt. Vorteilhafterweise wird ein bereits geschäumter und mit Flammschutzmittel ausgerüsteter duroplastischer Kunststoff verwendet, der in eckige oder runde Stücke mit einer maximalen Kantenlänge bzw. einem maximalen Durchmesser von 0,1 mm bis 10 mm, vorzugsweise 0,5 mm bis 8 mm, weiterhin vorzugsweise 1 mm bis 6 mm, zerteilt wird, anschließend mit vorgeschäumten Polystyrol-Partikeln homogen gemischt und die Mischung in einer Form unter Zugabe von Druck und/oder Wärme zu einem Verbundkörper verschweißt wird. Alternativ oder ergänzend kann die Dotierung mit Flammschutzmittel auch nach dem Schäumen des duroplastischen Kunststoffs erfolgen bzw. bereits geschäumter und ggf. bereits mit Flammschutzmittel ausgerüsteter duroplastischer Kunststoff weiter aufgerüstet werden, um den vorliegenden Anforderungen an einen effektiven Brandschutz zu genügen. Das Flammschutzmittel oder zumindest ein Teil des Flammschutzmittels kann demnach vor oder nach dem Schäumen dem duroplastischen Kunststoff zugegeben werden.

Vorzugsweise wird ein geschäumter, mit Flammschutzmittel ausgerüsteter duroplastischer Kunststoff verwendet, der eine Rohdichte von 20 bis 100 kg/m³ besitzt. In diesem Fall ist eine ausreichende Ähnlichkeit der Rohdichten der geschäumten Kunststoffe gegeben, welche eine gute Durchmischung und damit eine weitgehend homogene Struktur des Dämmelementes gewährleistet.

Neben den bereits genannten Ausgangsstoffen können weitere Zusatzstoffe verwendet werden. Beispielsweise können der Mischung aus geschäumtem, mit Flammschutzmittel ausgerüstetem duroplastischen Kunststoff und vorgeschäumten Polystyrol-Partikeln vor dem Eingeben in die Form Fasern, Füllstoffe und/oder Additive zugegeben werden. Die Zugabe von Fasern führt zu einer verbesserten mechanischen Stabilität, während über die Zugabe von Additiven Einfluss auf die Verarbeitungseigenschaften der Ausgangsstoffe und/oder die stoffbezogenen spezifischen Eigenschaften des Dämmelementes genommen werden kann.

Das ferner zur Lösung der eingangs gestellten Aufgabe vorgeschlagene Dämmelement aus einem Verbundschaumstoff umfassend geschäumtes Polystyrol, in den Partikel oder Stücke eines geschäumten duroplastischen Kunststoffs eingebunden sind, zeichnet sich erfindungsgemäß dadurch aus, dass der eingebundene duroplastische Kunststoff mit einem Flammschutzmittel ausgerüstet ist. Der duroplastische Kunststoff dient hierbei als Flammschutzmittel-Träger und gewährleistet eine gleichmäßige Verteilung des Flammschutzmittels innerhalb des Dämmelementes. Darüber hinaus ist sichergestellt, dass - sofern überhaupt - die Wärmedämmeigenschaften nur unwesentlich verschlechtert werden, da der geschäumte duroplastische Kunststoff selbst ein Wärmedämmstoff ist. Der Polystyrol-Anteil im Dämmelement kann demnach weitgehend beliebig reduziert und durch flammgeschützte Partikel bzw. Stücke aus duroplastischem Kunststoff ersetzt werden, um - unter Beibehaltung einer geringen Wärmeleitfähigkeit - das Brandverhalten des Dämmelementes im Hinblick auf einen effektiven Brandschutz zu verbessern. Bei dem eingesetzten Flammschutzmittel handelt es sich vorzugsweise um Melamin, Tris(2-chlorisopropyl)phosphat (TCPP) und/oder Blähgraphit.

Ein erfindungsgemäßes Dämmelement besitzt weiterhin vorzugsweise eine Wärmeleitfähigkeit λ ≤ 0,40 W/(mK), vorzugsweise λ ≤ 0,35 W/(mK), weiterhin vorzugsweise λ ≤ 0,32 W/(mK), woraus ersichtlich wird, dass die Wärmedämmeigenschaften denen hochwertiger Polystyrol-Dämmstoffe entsprechen.

Des Weiteren wird vorgeschlagen, dass das Dämmelement nach einem erfindungsgemäßen Verfahren hergestellt worden ist. Auf diese Weise ist eine kostengünstige Herstellung des Dämmelementes gewährleistet. Denn es können die üblichen Anlagen zur Durchführung des Blockschäumverfahrens oder des Formteilautomatenverfahrens eingesetzt werden. Auch ein nach einem erfindungsgemäßen Verfahren hergestelltes Dämmelement unterscheidet sich nicht hinsichtlich seiner Handhabung und/oder Verarbeitung von herkömmlichen Dämmelementen, so dass keine zusätzlichen Schulungen der bauausführenden Firmen notwendig sind.

Schließlich wird die Verwendung eines erfindungsgemäßen Dämmelementes zur Schall- und/oder Wärmedämmung einer Gebäudewand- oder -decke vorgeschlagen, da in dieser Anwendung die Vorteile eines solchen Dämmelementes besonders gut zum Tragen kommen.

Gemäß einer bevorzugten Ausführungsform der Erfindung besitzt der Leichtfüllstoff eine Rohdichte, die kleiner 150 kg/m³, vorzugsweise kleiner 100 kg/m³ ist. Weiterhin vorzugsweise liegt die Rohdichte des Leichtfüllstoffs im Bereich von 10 kg/m³ bis 40 kg/m³. Dadurch sind ein geringes Gewicht und eine gute Handhabbarkeit eines aus einem erfindungsgemäßen Verbundschaumstoff hergestellten Wärmedämmelements gewährleistet.

Nachfolgend wird das erfindungsgemäße Verfahren anhand verschiedener Ausführungsbeispiele näher beschrieben.

### Ausführungsbeispiel 1

Zunächst wurde ein flammgeschützter Polyurethan-Hartschaum hergestellt. Hierzu wurden

| | |
|---|---|
| 90,0 g | Polyol (Terate 2541 der Fa. Invista) |
| 2,4 g | Schäumzusatzmittel |
| 15,0 g | TCPP |
| 1,1 g | Wasser |
| 2,6 g | Desmorapid 1792 der Fa. Bayer MaterialScience |
| 17,0 g | n-Pentan |

eingewogen, auf 23°C temperiert und mittels eines Labormischers vermischt. Dieser Mischung wurde die gleiche Menge an Blähgraphit zugegeben und untergemischt. Eventuell verflüchtigtes Treibmittel wurde (n-Pentan) wurde ergänzt. Anschließend wurden
200,0 g Desmodur 44V40 L der Fa. Bayer MaterialScience
auf 23°C temperiert und den Ausgangsstoffen untergemischt. Die Reaktionsmischung wurde anschließend in eine mit Papier ausgekleidete Holzform gegeben und zu einem Block aufgeschäumt.

Nach einer Reifezeit von 24 Stunden wurden aus dem Block Stücke mit einem Partikeldurchmesser von 2 mm bis 6 mm herausgeschnitten.

Zur Herstellung des flammgeschützten Verbundschaumstoffs wurden bezogen auf das Gesamtgewicht der Ausgangsstoffe

| | |
|---|---|
| 33,7 Gew.-% | der zuvor hergestellten Polyurethan-Hartschaum-Stücke mit |
| 66,3 Gew.-% | vorgeschäumter Polystyrol-Partikel (Korngröße 3 mm bis 8 mm, Schüttdichte 0,015 g/cm³ bis 0,016 g/cm³) |

homogen gemischt, in eine Form mit den Abmessungen 30 cm x 30 cm x 10 cm eingebracht und unter Zugabe von Druck (1 bar) und Wärme (100°C) zu einer Platte verschweißt. Als Heizmedium wurde Wasserdampf eingesetzt, der die Form von oben nach unten über im Deckel und Boden der Form eingebrachte Schlitze etwa 15 Sekunden lang flächig durchströmte. Abschließend wurde das Formteil aus der Form entnommen und über einen Zeitraum von einer Woche bei Raumtemperatur getrocknet.

Der auf diese Weise hergestellte Verbundschaumstoff wies nach DIN EN 12667 eine Wärmeleitfähigkeit λ =0,03086 W/(mK) und eine Dichte nach DIN EN 1602 von 20,2 kg/m³ auf.

Ferner wurden die Brennbarkeit und das Brandverhalten des Verbundschaumstoffs getestet, indem die Platte einer rauschenden Bunsenbrennerflamme (660 W) ausgesetzt wurde. Das Testverfahren zeigte, dass beim Beflammen der Platte das thermoplastische Polystyrol zwar schmolz, aber nicht brennend abtropfte, da das geschmolzene Polystyrol über die PUR-Hartschaumstücke gebunden wurde. Auf diese Weise konnte die Bildung eines flüssigen Polymersees vollständig unterbunden werden. Zwar fielen PUR-Hartschaumstücke, an denen das geschmolzene Polystyrol haftete, brennend herab, in Ermangelung einer fließfähigen Polymerschmelze konnte jedoch eine Brandweiterleitung wirksam verhindert werden.

### Ausführungsbeispiel 2

Zunächst wurde wieder ein flammgeschützter Polyurethan-Hartschaum hergestellt. Hierzu wurden

| | | |
|---|---|---|
| 100 | Gew.-Teile | Bayfomox PA der Fa. Lanxess |
| 50 | Gew.-Teile | Bayfomox P der Fa. Lanxess |
| 0,4 | Gew.-Teile | Wasser |

mittels eines Labormischers innig vermischt. Die Reaktionsmischung wurde in eine mit Papier ausgekleidete Holzform gegeben und zu einem Block aufgeschäumt.

Nach einer Reifezeit von 24 Stunden wurden aus dem Block Stücke mit einem Partikeldurchmesser von 2 mm bis 6 mm herausgeschnitten.

Zur Herstellung des flammgeschützten Verbundschaumstoffs wurden bezogen auf das Gesamtgewicht der Ausgangsstoffe

| | |
|---|---|
| 73,8 Gew.-% | der zuvor hergestellten Polyurethan-Hartschaum-Stücke mit |
| 26,2 Gew.-% | vorgeschäumter Polystyrol-Partikel (Korngröße 3 mm bis 8 mm, Schüttdichte 0,015 g/cm³ bis 0,016 g/cm³) |

homogen gemischt, in eine Form mit den Abmessungen 30 cm x 30 cm x 10 cm eingebracht und unter Zugabe von Druck (1 bar) und Wärme (100°C) zu einer Platte verschweißt. Als Heizmedium wurde Wasserdampf eingesetzt, der die Form von oben nach unten über im Deckel und Boden der Form eingebrachte Schlitze etwa 15 Sekunden lang flächig durchströmte. Abschließend wurde das Formteil aus der Form entnommen und über einen Zeitraum von einer Woche bei Raumtemperatur getrocknet.

Der auf diese Weise hergestellte Verbundschaumstoff wies eine Dichte nach DIN EN 1602 von 49,3 kg/m³ auf.

Ferner wurden die Brennbarkeit und das Brandverhalten des Verbundschaumstoffs getestet, indem die Platte einer rauschenden Bunsenbrennerflamme (660 W) ausgesetzt wurde. Das Testverfahren zeigte, dass beim Beflammen der Platte das thermoplastische Polystyrol zwar schmolz, aber nicht brennend abtropfte. Wie bei dem Versuch mit der nach dem Ausführungsbeispiel 1 hergestellten Platte wurde das geschmolzene Polystyrol über die PUR-Hartschaumstücke gebunden. Es bildete sich somit kein flüssiger Polymersee aus. Auch hier fielen zwar PUR-Hartschaumstücke, an denen das geschmolzene Polystyrol haftete, brennend herab, in Ermangelung einer fließfähigen Polymerschmelze fand jedoch keine Brandweiterleitung statt.

### Referenzbeispiel (Polystyrol-Hartschaumplatte)

Zur Herstellung der Polystyrol-Hartschaumplatte wurden 9 Liter vorgeschäumte Polystyrol-Partikel (Korngröße 3 mm bis 8 mm, Schüttdichte 0,015 g/cm³ bis 0,016 g/cm³) in eine Form mit den Abmessungen 30 cm x 30 cm x 10 cm gegeben und unter Zugabe von Druck (1 bar) und Wärme (100°C) zu einer Platte verschweißt. Als Heizmedium wurde Wasserdampf eingesetzt, der die Form von oben nach unten über im Deckel und Boden der Form eingebrachte Schlitze etwa 15 Sekunden lang flächig durchströmte. Abschließend wurde das Formteil aus der Form entnommen und über einen Zeitraum von einer Woche bei Raumtemperatur getrocknet.

Der auf diese Weise hergestellte Polystyrol-Hartschaumstoff wies nach DIN EN 12667 eine Wärmeleitfähigkeit λ =0,02952 W/(mK) und eine Dichte nach DIN EN 1602 von 16,2 kg/m³ auf.

Ferner wurden die Brennbarkeit und das Brandverhalten des Polystyrol-Hartschaumstoffs getestet, indem die Platte einer rauschenden Bunsenbrennerflamme (660 W) ausgesetzt wurde. Das Testverfahren zeigte, dass beim Beflammen der Platte das thermoplastische Polystyrol sofort schmolz und brennend abtropfte. In der Folge bildete sich ein viskoser, aber fließfähiger Polymersee aus, der sich bei weiterer Beflammung entzünden ließ und die Branderweiterung begünstigte.

Der Vergleich der Ausführungsbeispiele 1 und 2 mit dem Referenzbeispiel zeigt, dass das Brandverhalten der hergestellten Versuchsplatten verbessert werden konnte. Insbesondere konnte die Bildung eines flüssigen Polymersees verhindert werden, der leicht entzündlich ist und aufgrund seiner Fließfähigkeit zur Branderweiterung beiträgt. Zwar kann das Schmelzen des enthaltenen Polystyrols nicht verhindert werden, die ferner enthaltenen PUR-Hartschaustücke binden jedoch das geschmolzene Polystyrol, so dass es nicht zur Bildung eines gefährlichen Polymersees kommt.

## Patentansprüche

1. Verfahren zur Herstellung eines flammgeschützten Dämmelementes aus einem Verbundschaumstoff umfassend geschäumtes Polystyrol, in den Partikel oder Stücke eines geschäumten duroplastischen Kunststoffs eingebunden sind,
**dadurch gekennzeichnet, dass** ein schäumbarer oder geschäumter duroplastischer Kunststoff verwendet wird, der mit einem Flammschutzmittel ausgerüstet ist, wobei der mit einem Flammschutzmittel ausgerüstete, schäumbare oder geschäumte duroplastische Kunststoff geschäumt und/oder in Stücke zerteilt, anschließend mit vorgeschäumten Polystyrol-Partikeln homogen gemischt und die Mischung in einer Form unter Zugabe von Druck und/oder Wärme zu einem Verbundkörper verschweißt wird.

2. Verfahren nach Anspruch 1,
**dadurch gekennzeichnet, dass** Polyurethan, Polyisocyanurat, Phenolharzschaum und/oder Melaminharzschaum als schäumbarer oder geschäumter duroplastischer Kunststoff verwendet wird, der vorzugsweise mit Melamin, Tris(2-chlorisopropyl)phosphat (TCPP) und/oder Blähgraphit als Flammschutzmittel ausgerüstet ist.

3. Verfahren nach Anspruch 1 oder 2,
**dadurch gekennzeichnet, dass** 5 bis 80 Gew.-%, vorzugsweise 10 bis 60 Gew.-%, weiterhin vorzugsweise 20 bis 40 Gew.-%, mit Flammschutzmittel ausgerüsteter geschäumter duroplastischer Kunststoff und/oder 20 bis 95 Gew.-%, vorzugsweise 40 bis 90 Gew.-%, weiterhin vorzugsweise 60 bis 80 Gew.-% vorgeschäumte Polystyrol-Partikel bezogen auf das Gesamtgewicht der Ausgangsstoffe verwendet werden.

4. Verfahren nach einem der vorhergehenden Ansprüche,
**dadurch gekennzeichnet, dass** ein schäumbarer, mit Flammschutzmittel ausgerüsteter duroplastischer Kunststoff verwendet wird, der geschäumt und beim Schäumen mit vorgeschäumten Polystyrol-Partikeln verbunden wird, wobei die vorgeschäumten Polystyrol-Partikel in eine Oberfläche des geschäumten duroplastischen Kunststoffs eingebunden werden, wonach anschließend der geschäumte duroplastische Kunststoff mit oberflächig eingebundenen vorgeschäumten Polystyrol-Partikeln mit weiteren vorgeschäumten Polystyrol-Partikeln homogen gemischt und die Mischung in einer Form unter Zugabe von Druck und/oder Wärme zu einem Verbundkörper verschweißt wird.

5. Verfahren nach einem der vorhergehenden Ansprüche,
**dadurch gekennzeichnet, dass** ein geschäumter, mit Flammschutzmittel ausgerüsteter duroplastischer Kunststoff verwendet wird, der in eckige oder runde Stücke mit einer maximalen Kantenlänge bzw. einem maximalen Durchmesser von 0,1 mm bis 10 mm, vorzugsweise 0,5 mm bis 8 mm, weiterhin vorzugsweise 1 mm bis 6 mm zerteilt wird, wonach anschließend der geschäumte, in Stücke zerteilte duroplastische Kunststoff mit vorgeschäumten Polystyrol-Partikeln homogen gemischt und die Mischung in einer Form unter Zugabe von Druck und/oder Wärme zu einem Verbundkörper verschweißt wird.

6. Verfahren nach einem der vorhergehenden Ansprüche,
**dadurch gekennzeichnet, dass** ein geschäumter, mit Flammschutzmittel ausgerüsteter duroplastischer Kunststoff verwendet wird, der eine Rohdichte von 20 bis 100 kg/m³ besitzt.

7. Verfahren nach einem der vorhergehenden Ansprüche,
**dadurch gekennzeichnet, dass** der Mischung aus geschäumtem, mit Flammschutzmittel ausgerüstetem duroplastischen Kunststoff und vorgeschäumten Polystyrol-Partikeln vor dem Eingeben in die Form Fasern, Füllstoffe und/oder Additive zugegeben werden.

8. Dämmelement aus einem Verbundschaumstoff umfassend geschäumtes Polystyrol, in den Partikel oder Stücke eines geschäumten duroplastischen Kunststoffs eingebunden sind,
**dadurch gekennzeichnet, dass** der eingebundene duroplastische Kunststoff mit einem Flammschutzmittel, insbesondere Melamin, Tris(2-chlorisopropyl)phosphat (TCPP) und/oder Blähgraphit, ausgerüstet ist.

9. Dämmelement nach Anspruch 8,
**dadurch gekennzeichnet, dass** das Dämmelement eine Wärmeleitfähigkeit λ ≤ 0,40 W/(mK), vorzugsweise λ ≤ 0,35 W/(mK), weiterhin vorzugsweise λ ≤ 0,32 W/(mK) besitzt.

10. Dämmelement nach Anspruch 8 oder 9,
**dadurch gekennzeichnet, dass** Dämmelement nach einem der Verfahren der Ansprüche 1 bis 7 hergestellt worden ist.

11. Verwendung eines Dämmelementes nach einem der Ansprüche 8 bis 10 zur Schall- und/oder Wärmedämmung einer Gebäudewand- oder -decke.
